# EUROPEAN PATENT APPLICATION

(11) **EP 4 462 546 A1**
(43) Date of publication of application: **13.11.2024**
(21) Application number: 24172860.9
(22) Date of filing: 26.04.2024
(51) Int. Cl.: H01M 10/0583, H01M 10/04, H01M 50/466, H01M 50/46, H01M 10/052, H01M 4/70

(54) **ELECTRODE ASSEMBLY AND METHOD FOR MANUFACTURING SAME, AND SECONDARY BATTERY INCLUDING SAME**

(30) Priority: 02.05.2023 KR 20230057046
(71) Applicant: Samsung SDI Co., Ltd., Yongin-si, Gyeonggi-do 17084 (KR)
(72) Inventor: KANG, Min Jung, 17084 Yongin-si (KR)
(74) Representative: Marks & Clerk LLP

(57) **Abstract**

An electrode assembly includes two separators, at least one first electrode plate between the two separators, the at least one first electrode plate being aligned with the two separators into a zigzag shape, and second electrode plates coupled to the zigzag shape opposite to the at least one first electrode plate, the second electrode plate being outside of the two separators.

## Description

### BACKGROUND

### 1. Field

Various embodiments of the present disclosure relate to an electrode assembly, a method for manufacturing the same, and a secondary battery including the same.

### 2. Description of the Related Art

Unlike a primary battery that cannot be charged, a secondary battery is a battery that can be charged and discharged. Low-capacity secondary batteries packaged in the form of a pack including a single battery cell may be employed in portable small-sized electronic devices such as cellular phones or camcorders. In addition, large-capacity secondary batteries packaged in forms of battery packs including tens of battery cells connected to one another may be used for driving motors of hybrid vehicles or electric vehicles.

A secondary battery may be constructed by incorporating an electrode assembly and an electrolyte in a case with a separator interposed between a positive electrode plate and a negative electrode plate of the electrode assembly, and installing a cap plate in the case. Examples of electrode assembly types may include a wound type or a stack type. The electrode assembly may have an uncoated portion tab protruding upwardly or laterally, and a current collector member may be connected to the uncoated portion tab.

The above information disclosed in this Background section is only for enhancement of understanding of the background of the embodiments and therefore it may contain information that does not constitute prior art.

### SUMMARY

Aspects of embodiments provide an electrode assembly, including two separators, a single first electrode plate or a plurality of first electrode plates disposed between the two separators and aligned in a zigzag manner, and a second electrode plate coupled opposite to the first electrode plate from the outside of the two separators.

The electrode assembly may further include a fixing part that fixes at least partial regions of the first electrode plate to the separators.

The first electrode plate may include a plurality of separated first electrode plates, and the fixing part may fix the first electrode plates to the separators, respectively.

The fixing part may be formed in partial areas or rim areas of the separators.

The first electrode plates may be spaced apart from the separators by the fixing part.

The separators may be the same as or larger than the first electrode plate and the second electrode plate in size.

The first electrode plate and the second electrode plate may be formed in a "□" shape or an "inverse L" shape.

The fixing part may be formed in any one of rim areas, partial areas, and corner areas of the first electrode plate and the second electrode plate.

The fixing part may be formed through fusion or adhesion.

The fixing part may include polyimide (PI), polypropylene (PP), or polyethylene terephthalate (PET).

The two separators may be formed by bending in a zigzag manner.

Aspects of embodiments also provide a method for manufacturing an electrode assembly, including preparing two separators, aligning a single first electrode plate or a plurality of first electrode plates between the two separators, forming an overlapping stack by bending the two separators in a zigzag manner at preset intervals, and inserting a second electrode plate from the outside of the stack.

The aligning may further include fixing at least partial regions of the first electrode plate to the separators.

The at least partial regions of the first electrode plate may be fixed to partial regions or rim regions of the separators.

The aligning may further include fixing at least partial regions of the first electrode plate to the separator through fusion or adhesion.

At least some of the above and other features of the invention are set out in the claims.

### BRIEF DESCRIPTION OF DRAWINGS

Features will become apparent to those of skill in the art by describing in detail embodiments with reference to the attached drawings, in which:
FIG. 1 is a perspective view showing a secondary battery including an electrode assembly according to an embodiment of the present disclosure.
FIGS. 2A and 2B are a side view and a top view showing an electrode assembly according to an embodiment of the present disclosure. FIG. 2C is a cross-sectional view taken along line A-A' of FIG. 2B.
FIGS. 3A and 3B are a side view and a top view showing an electrode assembly according to another embodiment of the present disclosure.
FIG. 4 is a flowchart showing a method for manufacturing an electrode assembly according to another embodiment of the present disclosure.

### DETAILED DESCRIPTION

Hereinafter, preferred embodiments of the present disclosure will be described in detail with reference to the accompanying drawings.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

In addition, as used herein, the term "and/or" includes any and all combinations of one or more of the associated listed items. In addition, it will be understood that when an element A is referred to as being "connected to" an element B, element A can be directly connected to element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

In addition, when a part is referred to as being electrically coupled to another part, these parts can be directly coupled to each other, or these parts may be coupled to each other through another part interposed therebetween. Hereinafter, the first direction D1 may be a length direction of a case. The second direction D2 may be a thickness or height direction of the case.

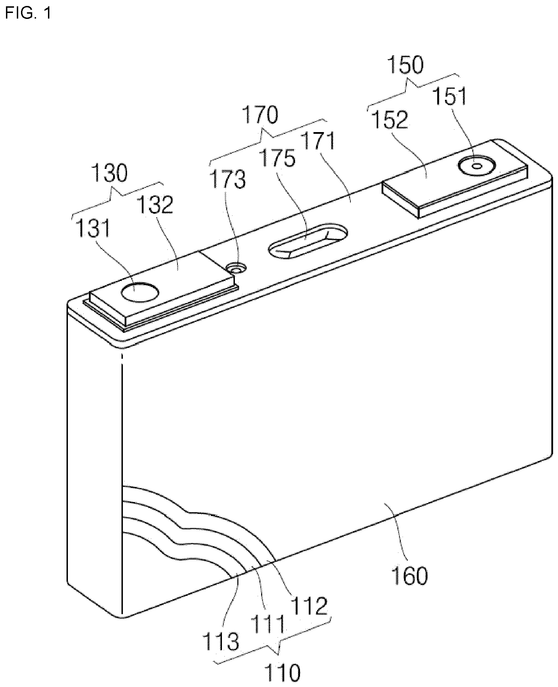

Referring to FIG. 1, a secondary battery, according to an embodiment of the present disclosure, may include a stack-type electrode assembly 110, a first current collector part electrically connected to one side (e.g., a first electrode tab) of the electrode assembly 110, a first terminal part 130 electrically connected to the first current collector part, a second current collector part electrically connected to the other side (e.g., a second electrode tab) of the electrode assembly 110, a second terminal part 150 electrically connected to the second current collector part, a case 160 accommodating the electrode assembly 110, and a cap assembly 170 coupled to an opening of the case 160. The electrode assembly 110 may include a separator 111 with a first electrode plate 112 and a second electrode plate 113, as will be described in more detail below.

For example, as illustrated in FIG. 1, the secondary battery including the electrode assembly 110 may be a lithium ion secondary battery having a quadrangular shape (e.g., a square shape). In another example, the secondary battery according to embodiments may be a lithium polymer battery or any other suitable type of battery.

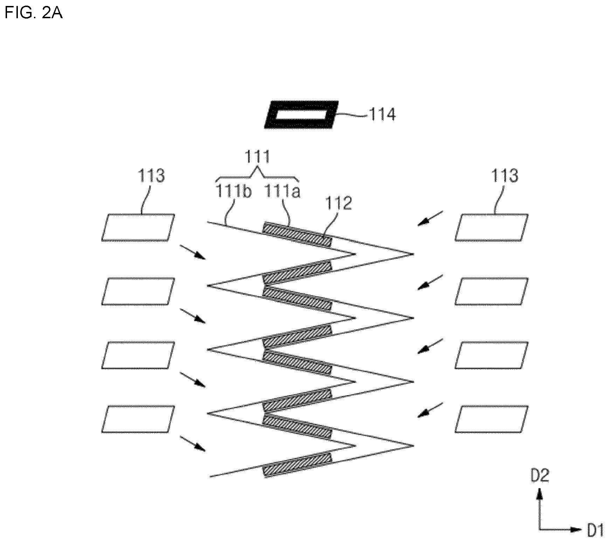

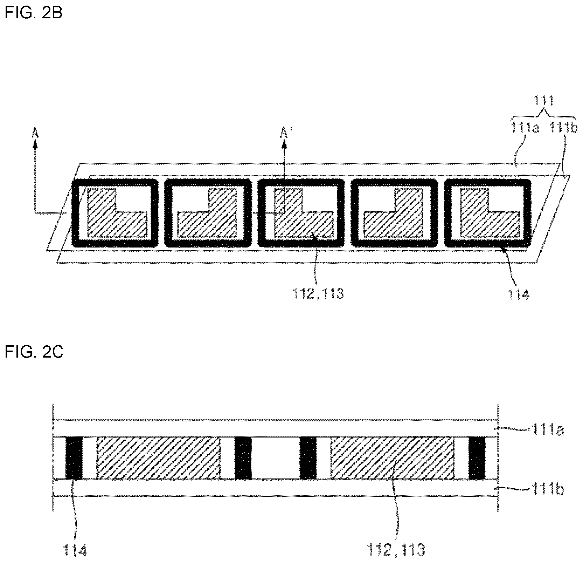

Referring to FIGS. 2A and 2B, a schematic side view and a schematic top view of an electrode assembly according to an embodiment of the present disclosure are shown, respectively. It is noted that FIG. 2A illustrates elements relative to a schematic side view of bent separators, while FIG. 2B illustrates elements relative to a schematic top view of the bent separators. That is, FIG. 2A is a view after the separator is bent, and FIG. 2B is a view before the separator is bent. Hereinafter, the configuration of the electrode assembly 110 in FIG. 1 will be described in more detail with reference to FIGS. 2A and 2B.

As shown in FIG. 2A, the electrode assembly 110 may include two separators 111, the first electrode plate 112 disposed between the two separators 111, the second electrode plate 113 that is coupled opposite to the first electrode plate 112 from the outside of the two separators 111, and a fixing part 114 (e.g., a fixer) that fixes the first electrode plate 112 to the separators 111. For example, referring to FIGS. 1, 2A, and 2B, each of the two separators 111, the first electrode plate 112, and the second electrode plate 113 may have a longitudinal direction extending in a longitudinal direction of the case 160 of the electrode assembly 110 in FIG. 1 (e.g., into the page of FIG. 2A).

For example, the electrode assembly 110 may be formed by stacking a plurality of first electrode plates 112 and a plurality of second electrode plates 113. The separators 111 may include a first separator 111a and a second separator 11 1b, each of which may have a plate shape, and may be disposed between the first electrode plate 112 and the second electrode plate 113. The first separator 111a and the second separator 111b may be bent and stacked in a 'Z' shape (e.g., in a zigzag shape in a direction (That is, second direction D2) perpendicular to the longitudinal direction (That is, first direction D1) of the separator 111) so as to be interposed between the first electrode plates 112 and the second electrode plates 113. In addition, the separators 111 may be the same size (e.g., length and/or width) or larger than the first electrode plates 112 and the second electrode plates 113 in size, in order to prevent short circuit between the first electrode plates 112 and the second electrode plates 113. In addition, the first electrode tab (i.e., the uncoated portion of the first electrode plate 112) and the second electrode tab (i.e., the uncoated portion of the second electrode plate 113) may protrude outwardly from respective opposite (e.g., both) short sides of the electrode assembly 110, and may be connected to the first current collector part and the second current collector part, respectively.

For example, the first electrode plate 112 may operate as a positive electrode and the second electrode plate 113 may operate as a negative electrode. In another example, the first electrode plate 112 may operate as a negative electrode and the second electrode plate 113 may operate as a positive electrode. For convenience of explanation, the present disclosure is described as an example in which the first electrode plate 112 operates as a positive electrode and the second electrode plate 113 operates as a negative electrode.

The first electrode plate 112 may be formed by applying a first electrode active material (e.g., a transition metal oxide) to a first electrode current collector formed of a metal foil (e.g., aluminium or aluminium alloy), and may include the first electrode tab (i.e., a first uncoated portion), which is an area to which the first electrode active material is not applied. The first electrode tab serves as a path for current flow between the first electrode plate 112 and the first current collector part. For example, the first electrode plate 112 may include a plurality of first electrode plates 112, which are placed between two separators 111 at preset intervals (e.g., each of the plurality of first electrode plates 112 may be between the first separator 111a and the second separator 111b). As shown in FIG. 2B, the first electrode plates 112 may be fixed to partial areas or rim areas of the separators 111 by the fixing part 114.

In addition, the first electrode tab may be formed by cutting in advance so as to protrude from one side of the first electrode plate 112, and thus may be formed integrally with the first electrode current collector. The first electrode plates 112 may be stacked so that the first electrode tabs overlap at the same position. In addition, if welding for attachment of the plurality of first electrode tabs to the first current collector part, the plurality of first electrode tabs may be gathered and combined approximately at the center of the short side of the electrode assembly 110. In some examples, the plurality of first electrode tabs may be gathered together and tack-welded, and the first current collector part may be welded and coupled to the tack-welded first electrode tabs.

The second electrode plate 113 may be formed by applying a second electrode active material (e.g., a transition metal oxide) to a second electrode current collector formed of a metal foil (e.g., copper or nickel), and may include the second electrode tab (i.e., a second uncoated region), which is an area to which the second electrode active material is not applied. The second electrode tab serves as a path for current flow between the second electrode plate 113 and the second current collector part. For example, the second electrode plate 113 may be coupled opposite to the first electrode plate 112 from the outside of the two separators 111. The second electrode plate 113 may be inserted at a position opposite to the first electrode plate 112 from the outside of the separators 111.

In addition, the second electrode tab may be formed by cutting in advance so as to protrude from the other side of the second electrode plate 113, and thus may be formed integrally with the second electrode current collector. A plurality of second electrode plates 113 may be stacked so that the second electrode tabs overlap at the same position. In addition, the plurality of second electrode plates 113 may be stacked so that the second electrode tabs are located in the opposite direction to the first electrode tabs. In addition, if welding for attachment of the plurality of second electrode tabs to the second current collector part, the plurality of second electrode tabs may be gathered and combined approximately at the center of the short side of the electrode assembly 110. In some examples, the plurality of second electrode tabs may be gathered together and tack-welded, and the second current collector part may be welded and coupled to the tack-welded second electrode tabs.

The separators 111 may be located between the first electrode plate 112 and the second electrode plate 113 and serve to prevent short circuits and enable the movement of lithium ions. The separators 111 may be made of polyethylene or a composite film of polyethylene and polypropylene. The separators 111 may include the first separator 111a and the second separator 111b, and may extend in a direction perpendicular to the direction in which the first electrode tab and the second electrode tab protrude (e.g., the zigzag shape of the separators 111 may extend in a direction oriented from a bottom of the case 160 toward the cap assembly 170 in a direction perpendicular to the direction in which the first electrode tab and the second electrode tab protrude).

As illustrated in FIG. 2A, the separator 111 may be bent in a 'Z' shape, so that the first electrode plate 112 may be interposed between the first separator 111a and the second separator 111b, and the second electrode plates 113 may be interposed outside the first separator 111a and the second separator 111b. For example, as illustrated in FIG. 2A, each of the first separator 111a and the second separator 111b may be bent in a continuous zigzag shape, and the first separator 111a and the second separator 111b may extend adjacent to each other in parallel zigzags, such that each of the plurality of first electrode plates 112 may be positioned between the first separator 111a and the second separator 11 1b. For example, as illustrated in FIG. 2A, each of the plurality of first electrode plates 112 may be at a different bent portion of the continuous combined zigzag shape of the first and second separators 111a and 11 1b, such that the plurality of first electrode plates 112 may define an approximate zigzag shape between the first and second separators 111a and 111b. For example, as further illustrated in FIG. 2A, each of the plurality of second electrode plates 113 may be inserted into a different external bent portion of the continuous combined zigzag shape of the first and second separators 111a and 11 1b, such that each of the first and second separators 111a and 111b may be between the plurality of first electrode plates 112 and a grouping of the plurality of second electrode plate 113 (e.g., a first grouping of the plurality of the second electrode plates 113 may face and be adjacent the first separator 111a, and a second grouping of the plurality of the second electrode plate 113 may face and be adjacent the second separator 111b).

The fixing part 114 may fix at least partial regions of the first electrode plate 112 between the two separators 111 (e.g., between parallel portions of the first separator 111a and the second separator 111b) to the separators 111. For example, the fixing part 114 may be formed in partial areas or rim areas of the separators 111. In some examples, the fixing part 114 may be formed in any one of rim areas, partial areas, and corner areas of the first electrode plate 112. The first electrode plates 112 may be separated from each other on the separators 111 by the fixing part 114. The fixing part 114 may be formed through fusion or adhesion (e.g., the fixing part 114 may be fused into a single and integral structure with the first electrode plates 112 and the separators 111 or may be attached to the first electrode plates 112 and the separators 111 via an adhesive). For example, the fixing part 114 may be a film-type tape having an adhesive layer formed on one side. In addition, the fixing part 114 may be made of a material having high heat resistance to prevent damage during fusion. For example, the fixing part 114 may include polyimide (PI), polypropylene (PP), or polyethylene terephthalate (PET).

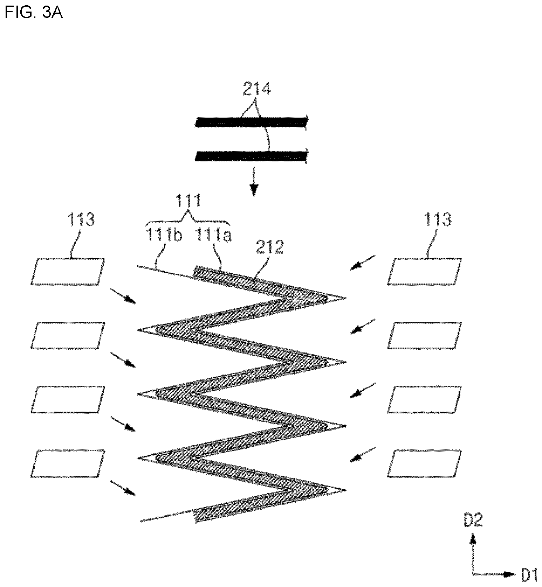

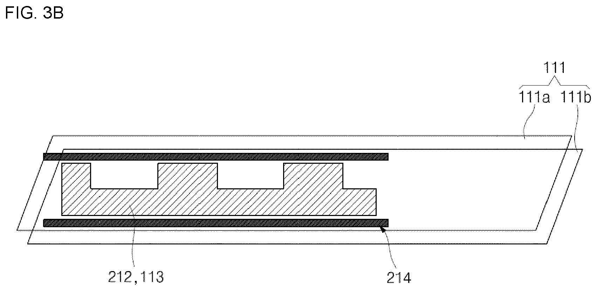

Referring to FIGS. 3A and 3B, a schematic side view and a schematic assembled top view of an electrode assembly according to another embodiment of the present disclosure are shown, respectively. It is noted that FIG. 3A illustrates elements relative to a schematic side view of the bent separators, while FIG. 3B illustrates elements relative to a schematic top view of the bent separators. That is, Fig. 3A is a view after the separator is bent, and Fig. 3B is a view before the separator is bent. The electrode assembly in FIGS. 3A-3B has a substantially same structure as the electrode assembly in FIGS. 2A-2B, with the exception of the structure of the first electrode plate.

As shown in FIG. 3A, a first electrode plate 212 disposed between two single separators 111 may be provided to have a single rectangular plate shape in the longitudinal direction of the separators 111 (e.g., the first electrode plate 212 may extend continuously between the first and second separators 111a and 111b along the entire length of at least one of the first and second separators 111a and 11 1b in the vertical and horizontal directions). The single first electrode plate 212 may be aligned between the two separators 111, forming a stack in which the two separators 111 and the first electrode plate 212 may be overlapped in a zigzag manner at preset intervals, and the second electrode plate 113 may be inserted from the outside of the stack to form the electrode assembly 110. Therefore, by manufacturing the electrode assembly 110 by bending the plate-shaped first electrode plate 212 in a zigzag manner, the process efficiency may be improved (e.g., as compared to an increased process time required to produce a plurality of electrode plate units by cutting a single electrode plate into individual electrode units). Additionally, the single first electrode plate 212 may be fixed to the rim areas in the longitudinal direction of the separators 111. In one embodiment, as shown in FIG. 3B, a fixing part 214 may be formed on both rims in the longitudinal direction of the separators 111, e.g., the fixing part 214 may attach opposite edges of the single first electrode plate 212 to rims (e.g., edges or peripheral portions) of the separators 111 in the longitudinal direction of the separators 111.

For example, as illustrated in FIG. 2A, the first electrode plate 112 and the second electrode plate 113 may be formed in an "o" shaped 1D structure (e.g., each of the first electrode plate 112 and the second electrode plate 113 may have a rectangular shape in a side view after the separator is bent). For example, as illustrated in FIG. 2B, the first electrode plate 112 and the second electrode plate 113 may be formed in an "inverse L" shaped 2D structure (e.g., each of the first electrode plate 112 and the second electrode plate 113 may have a an L-shape or a reversed L-shape in a side view after the separator is bent).

Therefore, according to the present disclosure, process efficiency may be significantly increased due to an increased number of stacked electrodes (e.g., stacking twice as many electrode plates as before), while using the same stacking process, by fixing a negative or positive electrode plate within two separators and inserting another electrode plate. Furthermore, according to the present disclosure, since the position of the electrode plate may be fixed by fusion or adhesion of separators to one of the rim areas of the negative electrode plate or the positive electrode plate, curling of an electrode plate during the electrode assembly manufacturing process may be prevented or substantially minimized.

Referring back to FIG. 1, the electrode assembly 110 may be accommodated in the case 160 together with, e.g., an electrolyte solution. The electrolyte solution may include an organic solvent, e.g., ethylene carbonate (EC), propylene carbonate (PC), diethyl carbonate (DEC), ethyl methyl carbonate (EMC), or dimethyl carbonate (DMC), and a lithium salt, e.g., LiPF₆ or LiBF₄. In addition, the electrolyte solution may be in a liquid, solid, or gel phase.

The first current collector part may be coupled to the first terminal part 130 coupled to the cap assembly 170 and then coupled to the first electrode tab of the electrode assembly 110. The first terminal part 130 may be electrically connected to the first electrode tab of the electrode assembly 110 through the first current collector part. In addition, the first terminal part 130 may be located on the cap plate 171 and may include a first terminal plate 132 (e.g., made of aluminium) coupled to a first terminal pillar 131, a first insulating member installed between the first terminal plate 132 and a cap plate 171, and a first seal gasket interposed between the first terminal pillar 131 and the cap plate 171.

For example, the first insulating member may be replaced with an entire high-resistance member, and in this case, the cap plate 171 and the case 160 may have the same polarity as the first terminal part 130. That is, the case 160 and the cap plate 171 of the secondary battery may be charged as a positive polarity. For example, the structure of the first terminal part 130 is merely an example and may be modified into any suitable form/structure.

The second current collector part may be coupled to the second terminal part 150 coupled to the cap assembly 170 and then coupled to the second electrode tab of the electrode assembly 110. The second terminal part 150 may be electrically connected to the second electrode tab of the electrode assembly 110 through the second current collector part. In addition, the second terminal part 150 may be located on the cap plate 171 and may include a second terminal plate 152 (e.g., made of aluminium) coupled to a second terminal pillar 151, a second insulating member installed between the second terminal plate 152 and the cap plate 171, and a second seal gasket interposed between the second terminal pillar 151 and the cap plate 171. For example, the second terminal part 150 is merely an example and may be modified into any suitable form/structure.

The case 160 may be shaped of, e.g., a hollow rectangular parallelepiped having an opening at an upper portion thereof. The electrode assembly 110 may be inserted into the case 160 through the opening. In addition, the first current collector part and the second current collector part may also be located inside the case 160.

The cap assembly 170 may include the cap plate 171 in the form of a flat plate. That is, the cap plate 171 may be made of a thin plate and may be coupled to the opening of the case 160 to seal the opening. In addition, the cap plate 171 may include an electrolyte injection part through which an electrolyte is injected into the sealed case 160, and the electrolyte injection part may be sealed by a sealing cap 173 after the electrolyte is injected. In addition, the cap plate 171 may include a vent hole, and a vent plate 175 that breaks if the internal pressure of the sealed case 160 exceeds a set pressure and is installed in the vent hole.

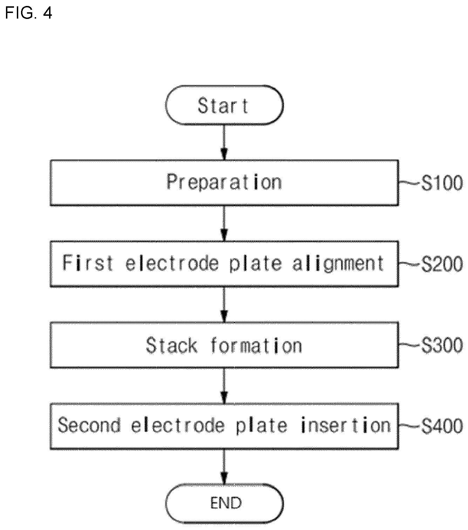

Referring to FIG. 4, a flow chart of a method for manufacturing an electrode assembly according to an embodiment of the present disclosure is shown. As shown in FIG. 4, the method for manufacturing an electrode assembly may include preparation (S100), a first electrode plate alignment (S200), a stack formation (S300), and a second electrode plate insertion (S400).

In the preparation operation (S100), two plate-shaped separators 111 may be prepared.

In the first electrode plate alignment operation (S200), a single first electrode plate 212 or a plurality of first electrode plates 112 may be aligned between the two separators 111. For example, referring to FIG. 3A, a single first electrode plate 212 shaped of a rectangle elongated in the longitudinal direction of the two separators 111 may be aligned between the two separators 111. In another example, referring to FIG. 2A, a plurality of first electrode plates 112 spaced apart from each other may be aligned between the two separators 111 at regular intervals in the longitudinal direction of the two separators 111.

For example, the first electrode plate alignment operation (S200) may further include fixing at least partial regions of the first electrode plates 112 or the single first electrode plate 212 to the two separators 111. Fixing of the first electrode plates to the two separators 111 may include fixing the first electrode plates 112 or 212 to partial regions or rim regions of the separators 111. Additionally, during fixing, at least partial portions of the first electrode plates 112 or 212 may be fixed to the separators 111 through fusion or adhesion.

In the stack formation operation (S300), an overlapping stack may be formed by bending the two separators 111 in a zigzag manner at preset intervals. For example, referring to FIG. 3A, the single first electrode plate 212 may be stacked between the first and second separators 111a and 11 1b (e.g., the single first electrode plate 212 may be directly between and in direct contact with the first and second separators 111a and 11 1b), and the entire stack may be bent together into a zigzag shape. In another example, referring to FIG. 2A, the plurality of first electrode plates 112 may be arranged at predetermined intervals between the first and second separators 111a and 111b in a stack structure, and the entire stack may be bent together into a zigzag shape having one of the first electrode plates 112 in each bent portion of the zigzag shape. For example, as illustrated in FIGS. 2A and 3A, the first electrode plates 112 and 212 may be within the zigzag shaped stack (e.g., internal with respect to the zigzag shaped stack).

In the second electrode plate insertion operation (S400), the second electrode plates 113 may be inserted from the outside of the stack (e.g., the second electrode plates 113 may be external with respect to the zigzag shaped stack). For example, the second electrode plates 113 may be inserted at positions corresponding to the positions of the first electrode plates 112, e.g., the second electrode plates 113 may be inserted between bent portions of the zigzag shaped stack.

In this way, a single negative or positive electrode plate or a plurality of negative or positive electrode plates may be aligned and fixed between the two separators 111 to form a stack, and another electrode plate may be inserted outside the two separators 111, thereby manufacturing the electrode assembly 110.

As described above, the present disclosure provides an electrode assembly, a method for manufacturing the same, and a secondary battery including the same, by which process efficiency may be increased by fixing a negative or positive electrode plate within two separators and inserting another electrode plate. In addition, the present disclosure provides an electrode assembly, a method for manufacturing the same, and a secondary battery including the same, by which potential curling of an electrode plate during the electrode assembly manufacturing process may be prevented or substantially minimized since the position of the electrode plate may be fixed by fusion or adhesion of separators to one of rim areas of a negative electrode plate or a positive electrode plate.

By way of summation and review, if a current density in a stack type electrode assembly is low or a thickness of a cell in the stack type electrode assembly is large, the number of electrode plates that need to be stacked in the electrode assembly may increase, thereby decreasing process efficiency.

In contrast, embodiments of the present disclosure provide an electrode assembly, a method for manufacturing the same, and a secondary battery including the same, by which process efficiency can be increased by fixing a negative or positive electrode plate within two separators and inserting another electrode plate outside the two separators.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
Clause 1. An electrode assembly comprising:
   two separators;
   a single first electrode plate or a plurality of first electrode plates disposed between the two separators and aligned in a zigzag manner; and
   a second electrode plate coupled opposite to the first electrode plate(s) from the outside of the two separators.
Clause 2. The electrode assembly of clause 1, further comprising a fixing part that fixes at least partial regions of the first electrode plate to the separators.
Clause 3. The electrode assembly of clause 2, wherein the first electrode plate comprises a plurality of separated first electrode plates, and the fixing part fixes the first electrode plates to the separators, respectively.
Clause 4. The electrode assembly of clause 3, wherein the fixing part is formed in partial areas or rim areas of the separators.
Clause 5. The electrode assembly of clause 3 or clause 4, wherein the first electrode plates are spaced apart from the separators by the fixing part.
Clause 6. The electrode assembly of any one of clauses 1 to 5, wherein the separators are the same as or larger than the first electrode plate and the second electrode plate in size.
Clause 7. The electrode assembly of any one of clauses 1 to 6, wherein the first electrode plate and the second electrode plate are formed in a "o" shape or an "inverse L" shape.
Clause 8. The electrode assembly of any one of clauses 2 to 7, wherein the fixing part is formed in any one of rim areas, partial areas, and corner areas of the first electrode plate and the second electrode plate.
Clause 9. The electrode assembly of any one of clauses 2 to 8, wherein the fixing part is formed through fusion or adhesion.
Clause 10. The electrode assembly of clause 9, wherein the fixing part includes polyimide (PI), polypropylene (PP), or polyethylene terephthalate (PET).
Clause 11. The electrode assembly of any one of clauses 1 to 10, wherein the two separators are formed by bending in a zigzag manner.
Clause 12. A secondary battery comprising the electrode assembly of any of clauses 1 to 11.
Clause 13. A method for manufacturing an electrode assembly, comprising the steps of:
   a first step of preparing two separators;
   a second step of aligning a single first electrode plate or a plurality of first electrode plates between the two separators;
   a third step of forming an overlapping stack by bending the two separators in a zigzag manner at preset intervals; and
   a fourth step of inserting a second electrode plate from the outside of the stack.
Clause 14. The method of clause 13, wherein the second step further comprises fixing at least partial regions of the first electrode plate to the separators.
Clause 15. The method of clause 14, wherein the at least partial regions of the first electrode plate are fixed to partial regions or rim regions of the separators.
Clause 16. The method or clause 14 or clause 15, wherein the second step may further include fixing at least partial regions of the first electrode plate to the separator through fusion or adhesion.

## Claims

1. An electrode assembly, comprising:
two separators;
at least one first electrode plate between the two separators, the at least one first electrode plate being aligned with the two separators into a zigzag shape; and
second electrode plates coupled to the zigzag shape opposite to the at least one first electrode plate, the second electrode plate being outside of the two separators.

2. The electrode assembly as claimed in claim 1, further comprising a fixer, the fixer fixing at least partial regions of the at least one first electrode plate to the two separators.

3. The electrode assembly as claimed in claim 2, wherein the at least one first electrode plate includes a plurality of first electrode plates spaced apart from each other between the two separators, the fixer fixing the plurality of first electrode plates to the two separators, respectively.

4. The electrode assembly as claimed in claim 3, wherein the fixer is in partial areas or rim areas of the two separators.

5. The electrode assembly as claimed in claim 3 or claim 4, wherein the plurality of first electrode plates are spaced apart on the two separators by the fixer.

6. The electrode assembly as claimed in any one of claims 3 to 5, wherein each of the two separators has a length that is the same as or larger than each of the plurality of first electrode plates and the second electrode plates.

7. The electrode assembly as claimed in any one of claims 3 to 6, wherein each of the plurality of first electrode plates and the second electrode plates has a shape of a rectangle or an inverted L.

8. The electrode assembly as claimed in any one of claims 2 to 7, wherein the fixer is in any one of rim areas, partial areas, and corner areas of the at least one first electrode plate and the second electrode plates.

9. The electrode assembly as claimed in any one of claims 2 to 8, wherein the fixer is an adhesive or fused with the at least one first electrode plate and the two separators into a single structure, optionally wherein the fixer includes polyimide (PI), polypropylene (PP), or polyethylene terephthalate (PET).

10. The electrode assembly as claimed in any one of claims 1 to 9, wherein each of the two separators has a zigzag shape, the two separators extending adjacent to each other in parallel zigzags with the at least one first electrode stacked therebetween.

11. The electrode assembly as claimed in claim 1 or claim 2, wherein the at least one first electrode plate is a single continuous electrode plate extending along an entire length of at least one of the two separators.

12. A secondary battery comprising the electrode assembly as claimed in any one of claims 1 to 11.

13. A method for manufacturing an electrode assembly, the method comprising:
preparing two separators;
aligning at least one first electrode plate between the two separators;
forming an overlapping stack by bending the two separators with the at least one first electrode plate therebetween in a zigzag manner at preset intervals; and
inserting second electrode plates from the outside of the stack.

14. The method as claimed in claim 13, wherein aligning the at least one first electrode plate between the two separators includes fixing at least partial regions of the at least one first electrode plate to two the separators.

15. The method as claimed in claim 14, wherein:
(i) the at least partial regions of the at least one first electrode plate are fixed to partial regions or rim regions of the two separators; and/or
(ii) aligning the at least one first electrode plate between the two separators further includes fixing the at least partial regions of the at least one first electrode plate to the two separators through fusion or adhesion.
